# EUROPÄISCHE PATENTANMELDUNG

(11) **EP 1 473 112 A1**
(43) Veröffentlichungstag der Anmeldung: **03.11.2004**
(21) Anmeldenummer: 04010066.1
(22) Anmeldetag: 28.04.2004
(51) Int. Cl.: B23Q 41/02

(54) **Bearbeitungsmaschine**

(30) Priorität: 28.04.2003 DE 10319137; 26.09.2003 DE 10345119
(71) Anmelder: Grob-Werke Burkhart Grob e.K., 87719 Mindelheim (DE)
(72) Erfinder: Lutz, Heinrich, 87742 Dirlewang (DE)
(74) Vertreter: Pfister, Stefan, Dipl.-Phys.

(57) **Zusammenfassung**

Die Erfindung betrifft eine Bearbeitungsmaschine, bei welcher das Werkstück durch eine Transporteinrichtung in den Bearbeitungsraum der Bearbeitungsmaschine transportiert wird und das Werkstück in der Bearbeitungsposition von einer Spanneinrichtung gespannt ist. Es wird vorgeschlagen, daß die Transporteinrichtung sowohl für einen An- und Abtransport des Werkstückes zur Bearbeitungsmaschine, wie auch für den Transport des Werkstückes in dem Bearbeitungsraum sorgt.

## Beschreibung

Die Erfindung betrifft eine Bearbeitungsmaschine, bei welcher das Werkstück durch eine Transporteinrichtung in den Bearbeitungsraum der Bearbeitungsmaschine transportiert wird und das Werkstück in der Bearbeitungsposition von einer Spanneinrichtung gespannt wird.

Vorgenannte Bearbeitungsmaschinen sind im Stand der Technik hinlänglich bekannt. Sie werden zum Beispiel bei der zerspanenden Bearbeitung eingesetzt. Es ist auch bekannt, diese Bearbeitungsmaschinen zum Beispiel in einer Transferstraße oder einer Gruppe von Bearbeitungsmaschinen, die untereinander verkettet sind, einzusetzen. Das Charakteristische solcher Anordnungen ist, daß die jeweiligen Bearbeitungsmaschinen für einen speziellen Bearbeitungsschritt oder eine Gruppe von Bearbeitungsschritten spezialisiert sind.

Die große Anzahl von möglichen Bearbeitungsschritten innerhalb einer solchen Bearbeitungslinie erlaubt komplexe Bearbeitungen an den Werkstücken.

Es ist bekannt, die Werkstücke mit speziellen Übersetzern von einem Transportband in die Bearbeitungsmaschinen einzuladen und nach deren Bearbeitungen durch die Übersetzer wieder herauszufördern. Dabei ist der Übersetzer roboterähnlich ausgebildet, also verhältnismäßig komplex. Auch benötigt die Aufnahme der Werkstückes durch den Übersetzer eine gewisse Zeit, die zu Lasten der Taktzeit geht.

Die Erfindung hat es sich zur Aufgabe gemacht, eine Bearbeitungsmaschine, wie eingangs beschrieben, dahingehend zu verbessern, daß die Taktzeiten verringert werden und somit die Bearbeitungsmaschine effizienter arbeitet.

Zur Lösung dieser Aufgabe schlägt die Erfindung vor, daß die Transporteinrichtung sowohl für einen An- und Abtransport des Werkstückes zur Bearbeitungsmaschine, insbesondere von und zu benachbarten Bearbeitungsmaschinen, wie auch für den Transport des Werkstückes in dem Bearbeitungsraum sorgt.

Der im Stand der Technik vorgesehene Übersetzer wird eingespart, indem der Bearbeitungsraum der erfindungsgemäßen Bearbeitungsmaschinen Teil des eigentlichen Transportweges wird.

Diese überraschend einfache Lösung führt unmittelbar zu einem Geschwindigkeitsvorteil, da nicht mehr das Werkstück erst im Greifbereich des Übersetzers zu positionieren ist und von diesem dann aufzunehmen und in den Bearbeitungsraum hineinzufördern ist, sondern die Erfindung erlaubt es, das Werkstück direkt unmittelbar über die gleiche Transporteinrichtung, die auch für den Transport der Werkstücke zwischen den Bearbeitungsmaschinen sorgt, im Bearbeitungsraum zu positionieren. Die Erfindung spart einen Schritt bei dem Vorbereiten beziehungsweise Vorhalten des zu bearbeitenden Werkstückes ein. Da günstigerweise die erfindungsgemäße Bearbeitungsmaschine zum Beispiel in einem Flußkonzept integriert ist, wird das fertig bearbeitete Werkstück zum Beispiel endseitig über die Transporteinrichtung herausgefahren und gleichzeitig eingangsseitig ein neues Werkstück eingefahren. Auf ein aufwendiges Auswechseln des Werkstückes mit Hilfe eines Wechslers kann hierbei ebenfalls verzichtet werden.

Darüberhinaus ist die erfindungsgemäße Lösung auch deutlich günstiger, da der verhältnismäßig aufwendige Übersetzer nach dem Stand der Technik eingespart wird. Die Erfindung erreicht so eine Lösung der erfindungsgemäßen Aufgabe und gleichzeitig eine Einsparung von Maschinenkosten.

Die Erfindung ist dabei in keinster Weise auf die Art der Bearbeitungsmaschine beschränkt. Es kann sich hierbei um eine "einfache Maschine" handeln, die zum Beispiel nur eine Bearbeitungsspindel und wenige Bewegungsachsen kennt, genauso wie bei einem komplexen Bearbeitungszentrum mit einer Vielzahl von Bearbeitungsachsen und/oder Bearbeitungsspindeln.

In einer vorteilhaften Ausgestaltung der Erfindung ist vorgesehen, daß die Transporteinrichtung das Werkstück bzw. ein das Werkstück tragender Werkstückträger direkt in die Spanneinrichtung transportiert. Die Spanneinrichtung befindet sich innerhalb des Bearbeitungsraumes. Die Spanneinrichtung fixiert das Werkstück entweder unmittelbar oder mittelbar über dessen Werkstückträger im Bereich der Bearbeitungsspindel mit dem Werkzeug. Es wird eine erhebliche Geschwindigkeitserhöhung erreicht, wenn das Werkstück unmittelbar in die Spanneinrichtung hineintransportiert wird und dann sofort, nachdem das Werkstück erkannt wurde, die Spanneinrichtung das Werkstück positioniert und festhält.

Vorteilhafterweise wird der Bearbeitungsraum durch mindestens eine Türe verschlossen. Die Türe ist dabei zum Beispiel horizontal oder vertikal bewegbar. Es kann sich dabei um Schiebetüren oder auch um Schwenktüren handeln. Es sind auch Anordnungen bekannt, bei welchen mehrere Türen vorgesehen sind, durch die das Werkstück zu transportieren ist. Zum Beispiel wird das Werkstück durch die erste Türe herein- und durch die zweite Türe wieder hinaustransportiert.

In einer erfindungsgemäßen Variante ist vorgesehen, daß eine oder mehrere parallel zum Transportweg verlaufenden Antriebswellen für die Transporteinrichtung vorgesehen sind. Zum Beispiel ist die Transporteinrichtung als Rollenbahn oder Friktionsrollenbahn ausgebildet, ohne hierauf die Erfindung beschränken zu wollen. Diese zentrale Antriebswelle erlaubt eine Vielzahl von einzelnen Antriebsrollen zentral anzutreiben. Dabei wird nur eine geringe Anzahl von Antriebsmotoren für diesen Antriebsstrang benötigt. Günstigerweise treibt ein Antriebsmotor eine Antriebswelle an, die sich zum Beispiel über mehrere erfindungsgemäße Bearbeitungsmaschinen erstreckt. Die Antriebswelle versorgt daher sowohl Bereiche der Transporteinrichtung innerhalb wie auch außerhalb der Bearbeitungsmaschine.

In einer bevorzugten Ausgestaltung der Erfindung ist vorgesehen, daß die Antriebswelle außerhalb der Türe beziehungsweise des von der sich öffnenden Türe überstrichenen Türbereiches angeordnet ist.

Eine solche Anordnung führt zum Beispiel zu einer Anordnung des Antriebsrades, wie es auf der Zeichnung gezeigt ist, wobei der Auflagepunkt des Werkzeugträgers oder der Palette auf dem Antriebsrad in einem deutlichen Abstand unterhalb der Achse der Antriebswelle angeordnet ist.

In einer weiteren erfindungsgemäßen Ausgestaltung wird vorgeschlagen, daß ein gemeinsamer Antrieb für die Spanneinrichtung und für eine Transporttrennvorrichtung vorgesehen ist, wobei die Transporttrennvorrichtung dafür sorgt, daß die Transporteinrichtung während der Spannung des Werkstückes nicht das Werkstück zu transportieren versucht und ermöglicht, daß die Spanneinrichtung das Werkstück spannt.

Aus dem Stand der Technik ist beispielsweise bekannt, zu bearbeitende Werkstücke in eine Werkzeugmaschinengruppe mit zwei einander gegenüberstehenden Bearbeitungseinheiten zu transportieren. Die Spannvorrichtung ist dabei auf einer Palette aufgenommen. Die Palette wird dann mittels eines Rundtischträgers in die Bearbeitungsstation zwischen den beiden Bearbeitungseinheiten transportiert. Diese Vorrichtungen sind sehr aufwendig und benötigen insbesondere unterschiedliche Antriebe für die Spannvorrichtung und für den Rundtischträger. Des weiteren wird ein gesonderter Antrieb ebenfalls für den Werkstückweitertransport nach der Bearbeitung bzw. vor der Bearbeitung benötigt. Insgesamt ist eine derartige Lösung sehr aufwendig, die durch den erfindungsgemässen Vorschlag, einen gemeinsamen Antrieb für die Spanneinrichtung und für eine Transporttrennvorrichtung vorzusehen, in erheblichem Maße günstiger gestaltet wird. Der Aufwand gegenüber der zuvor beschriebenen Lösung ist erheblich geringer. Zudem wird während der Bearbeitung bzw. des Spannvorganges erhebliche Zeit eingespart, die einen erheblich größeren Werkstückdurchsatz durch die Bearbeitungseinheit jetzt ermöglicht.

Aus dem Stand der Technik ist auch eine Lösung bekannt, bei der das Werkstück zur Bearbeitung in dem Bearbeitungsraum auf einen Vorrichtungswagen aufgespannt werden muß. Dieser Vorrichtungswagen läuft dann auf der Transportbahn und das Werkstück wird auf dem Vorrichtungswagen durch die Bearbeitungslage transportiert. Der konstruktive Aufwand, um das Werkstück für die jeweilige Bearbeitung zu positionieren bzw. das Werkstück gleichzeitig während der Bearbeitung durch die Werkzeugspindeln zu bewegen, ist erheblich. Auch ein derartiger Konstruktionsaufwand wird durch den erfindungsgemäßen Vorschlag, jetzt einen gemeinsamen Antrieb für die Spanneinrichtung und für eine Transporttrennvorrichtung vorzusehen, erheblich reduziert.

Im Stand der Technik, bei welcher die Palette mit dem Werkstück durch den Übersetzer in den Bearbeitungsraum hereintransportiert worden ist, waren keine Vorsehungen zu treffen, um die Transporteinrichtung außer Eingriff zu bringen. Die eigentliche Transporteinrichtung, das Werkstückband, lief auf der Seite des Übersetzers vorbei. Auf der anderen Seite ist natürlich für die Spanneinrichtung ein Antrieb vorgesehen. Erfindungsgemäß wird nun geschickterweise vorgeschlagen, diesen sowieso bereits bestehenden Antrieb für die Spanneinrichtung auch für eine Transporttrennvorrichtung einzusetzen, die dafür sorgt, die Transporteinrichtung außer Eingriff auf das Werkstück beziehungsweise dessen Palette zu bringen und zwar während des Zeitraumes, in dem das Werkstück gespannt beziehungsweise auch bearbeitet wird. Dabei legt sich die Erfindung in keinster Weise auf die Art des Antriebes und der Ableitung des Antriebes für die Spanneinrichtung und der Transporttrennvorrichtung fest. Es können zum Beispiel einfache mechanische aber auch elektrische beziehungsweise elektro-mechanische, hydraulische oder pneumatische Mittel hierfür vorgesehen sein. Der Vorteil dieser Ausgestaltung liegt insbesondere darin, daß kein zusätzlicher Antrieb für die Transporttrennvorrichtung bzw. für die Türe vorgesehen werden muß, wenngleich natürlich im Rahmen der Erfindung auch eine Anordnung geschützt ist, bei welcher je ein Antrieb für die Spanneinrichtung wie auch für die Transporttrennvorrichtung bzw. für die Türe vorgesehen ist.

Im Rahmen dieser Erfindung wird oftmals von einem Werkstück bzw. einem das Werkstück tragenden Werkstückträger gesprochen. Es ist darauf zu achten, daß, soweit eine Anwendung oder Funktionalität nur im Bezug auf das Werkstück beschrieben ist, diese gleichwohl auch für den Werkstückträger als beschrieben gilt, auch wenn dies nicht ausdrücklich vermerkt ist. Dabei dienen als Werkstückträger vorgefertigte Paletten, wie sie für den Transport auf entsprechenden Bearbeitungsmaschinen hinlänglich bekannt sind.

Die Erfindung sieht dabei in einer weiteren Variante vor, daß, nachdem das Werkstück in den Bearbeitungsraum hineintransportiert ist, zunächst der Antrieb auf die Transporttrennvorrichtung und danach der Antrieb auf die Spanneinrichtung wirkt. Diese Abfolge ist insofern vorteilhaft, daß zunächst, sobald das Werkstück in der gewünschten Position innerhalb des Bearbeitungsraumes angelangt ist, der Weitertransport des Werkstückes unterbunden wird, indem die Transporttrennvorrichtung von dem Antrieb aktiviert wird. Das somit bereits grob positionierte Werkstück, hierzu ist zum Beispiel ein Anschlag im Transportweg oder dergleichen vorgesehen, wird danach durch die Spanneinrichtung gespannt, wobei dann der Antrieb auf die Spanneinrichtung wirkt.

Im Sinne der Erfindung ist es aber auch möglich, daß, während die Spanneinrichtung das Werkstück bzw. einen das Werkstück tragenden Werkstückträger spannt, die Transporteinrichtung das Werkstück nicht bewegt. Bei dieser erfindungsgemäßen Ausgestaltung ist es nicht zwingend notwendig, daß eine Transporttrenneinrichtung vorgesehen ist. Die Transporttrenneinrichtung bewirkt letztendlich, daß das Werkstück von der Transporteinrichtung nicht mehr weitertransportiert wird. Damit das Werkstück an der gewünschten Position verbleibt, ist es aber auch im Sinne der Erfindung möglich, daß die Transporteinrichtung im Bereich des Spannraumes einfach ausgeschalten wird. Dies kann zum Beispiel durch entsprechende getrennte Transportblöcke erfolgen. Eine andere Möglichkeit besteht darin, daß das Werkstück zum Beispiel durch einen Stopper in der Bahn festgehalten wird, die Transporteinrichtung aber deswegen nicht angehalten wird. Friktionsrollen oder Kupplungen entkoppeln dann die Transporteinrichtung (z.B. die Rollenbahn) vom Antrieb. Für das Spannen des Werkstücke steht somit das Werkstück still.

Geschickterweise wird hierfür eine bevorzugt mechanisch ausgebildete Zwangssteuerung des Antriebes der Transporttrennvorrichtung und der Spanneinrichtung eingesetzt. Eine solche Zwangssteuerung führt zu einer erheblichen Einsparung von Taktzeit, da die jeweiligen Schritte der Transporttrennvorrichtung und der Spanneinrichtung optimal aufeinander abstimmbar sind. Dabei ist es möglich, eine solche Zwangssteuerung je nach Art des Antriebes (siehe oben) in einfachster Weise zu realisieren. Zum Beispiel ist es möglich, bei einem pneumatischen oder hydraulischen Antrieb durch entsprechende, sich öffnende oder schließende Steueröffnungen zu entsprechenden Zeitpunkten die Spanneinrichtung zum Beispiel zu- oder abzuschalten.

Die Erfindung bietet aber spezielle Vorteile in der Ausgestaltung einer mechanisch ausgebildeten Zwangssteuerung, da diese günstig herstellbar und einfach realisier- und einstellbar ist.

In einer bevorzugten Variante der Erfindung ist vorgesehen, daß der obere Rand der Türe etwas über den oberen Rand des Werkstückes bzw. eines das Werkstück tragenden Werkstückträgers angeordnet ist. Die Antriebswelle, die die Transporteinheit antreibt, wird dabei in den Bereich des Maschinengehäuses geführt, der nicht von der Türe gebildet ist. Die Türöffnung wird dabei nur gerade so groß ausgebildet, um das Werkstück aus- und einfördern zu können. Dadurch erleichtert sich die Ausgestaltung des Türantriebes, da dieser, falls die Türe zu groß bemessen ist, unter Umständen größer oder schneller dimensioniert werden muß, um in akzeptabler Zeit die Maschinentüre zu öffnen, die ja erst geöffnet werden kann, wenn die Bearbeitung abgeschlossen ist. Die Türöffnungs- bzw. schließzeiten bestimmen daher letztendlich auch die Effizienz bzw. das Leistungsvermögen der erfindungsgemäßen Bearbeitungsmaschine.

Von Vorteil ist es insbesondere, wenn vorgesehen ist, daß der gemeinsame Antrieb, der für die Transporttrennvorrichtung und/oder die Spannvorrichtung vorgesehen ist, auch die Türe antreibt. Zum einen werden damit Antriebe eingespart. Zum anderen ist durch eine geschickte, mechanische Anordnung es in einfacher Weise möglich, die zeitliche Abfolge von Türöffnung bzw. -schließung, Spannen und gegebenenfalls Abkoppeln der Transporteinheit zu koordinieren.

Insofern ist es von Vorteil, wenn der Türantrieb zum Beispiel zwangsgesteuert insbesondere in dem Antrieb der Transporttrennvorrichtung bzw. der Spanneinrichtung erfolgt.

Zum Beispiel sind für als Schiebetür ausgestaltete Türen auf der bei dem Antrieb angetriebenen Welle Riemenscheiben vorgesehen, deren Zahnriemen die Schiebetüren bewegen.

In einer bevorzugten Ausgestaltung der Erfindung ist vorgesehen, daß die Spanneinrichtung und die Transporttrennvorrichtung je eine Steuerstange aufweisen, auf die eine, von dem Antrieb angetriebene Welle wirkt. Ausgehend von der Anordnung im Stand der Technik, bei welchem eine solche Anordnung für die Spanneinrichtung bereits eingesetzt wird, wird diese nunmehr um eine Anordnung zur Steuerung der Transporttrennvorrichtung ergänzt. Vorteilhafterweise wird dabei ein ähnlicher Aufbau gewählt. Geschickterweise werden die Steuerstangen auf der gleichen, von dem Antrieb angetriebenen Welle, angeordnet.

Für den Antrieb der Türe wird geschickterweise eine Riemenscheibe auf dieser gemeinsamen Welle eingesetzt.

In einer weiteren Variante der Erfindung ist vorgesehen, daß die Welle zu unterschiedlichen Winkelstellungen auf die Steuerstange der Transporttrennvorrichtung beziehungsweise der Spanneinrichtung wirkt. Hierdurch ist in einfachster mechanischer Bauweise eine Zwangssteuerung für die Transporttrennvorrichtung beziehungsweise die Spanneinrichtung realisierbar. Die Winkelstellungen der Schubstange für die Transporttrennvorrichtung beziehungsweise die Spanneinrichtung werden dabei gerade so gewählt, daß die jeweiligen Tätigkeiten abgeschlossen sind oder gleichzeitig erfolgen, einander aber nicht behindern, also zum Beispiel der Transport ausgeschaltet ist und danach das Spannen des Werkstückes erfolgt.

In einer ersten Variante ist gemäß der Erfindung vorgesehen, daß auf der Welle Nocken angeordnet sind und die Nocken auf die Steuerstangen wirken. Die Nocken besitzen dabei eine unterschiedliche Winkelstellung, wodurch sich die unterschiedlichen Bewegungen der Steuerstangen entlang der Rotation der Welle ergeben.

In einer anderen Variante der Erfindung ist zum Beispiel vorgesehen, daß die Steuerstange eine Pleuelstange aufweist und an der Welle exzentrisch ein Kurbelzapfen angeordnet ist, welcher mit der Pleuelstange verbunden ist. Auch diese Anordnung eines Gestänges zur Umsetzung einer Rotationsbewegung in eine Linearbewegung ist zwar hinlänglich bekannt, bietet aber gerade in diesem erfindungsgemäßen Einsatzbereich aufgrund seiner hohen Zuverlässigkeit und Einfachheit Vorteile. Auch hier werden die unterschiedlichen Winkelstellungen durch unterschiedliche Anordnung der exzentrischen Kurbelzapfen erreicht.

Gemäß der Erfindung ist es möglich, daß das Werkstück mit oder ohne Werkstückträger von der Transporteinheit transportiert wird. Dies hängt letztendlich von dem speziellen Einsatzbereich der Bearbeitungsmaschine ab, ob es günstiger ist, einen Werkstückträger (oder Palette) einzusetzen, oder aber das Werkstück direkt zu transportieren.

Als günstig hat es sich dabei ergeben, daß die Transporteinrichtung als Rollenbahn ausgebildet ist. Eine solche Rollenbahn oder Rollenband, gegebenenfalls auch als Friktionsrollenband bezeichnet, ist als Fördermittel in vorgenannten Bearbeitungsmaschinen nicht unbekannt. Gerade Friktionsrollenbänder erlauben auch eine Stauförderung, da dann die Friktion das entsprechend blockierte Rad aufgrund der zu hohen Reibung einfach nicht antreibt. Im Sinne der Erfindung ist es aber auch möglich, anstelle von dem Rollenband als Transporteinrichtung auch beliebige andere Transporteinrichtungen einzusetzen. Dies können zum Beispiel Transportbänder sein.

Gemäß der Erfindung ist die Drehachse der Rollenbahn horizontal, vertikal und/oder schräg orientiert. Es gibt verschiedene Konzepte, wie der Werkstückträger bzw. das Werkstück durch die Transportrollenbahn antreibbar ist. Schräg orientierte Auflageflächen führen dabei gegebenenfalls zu schräg orientierte Drehachsen oder zu kegelstumpfartigen Antriebsrollen, die um horizontal und/oder vertikal orientierten Drehachsen rotieren. Die schräge Anordnung der Laufflächen bzw. Auflageflächen der Werkstückträger ergeben aber eine Eigenführung der Werkstücke auf der Bahn und vermindern so die Gefahr eines ungewollten Werkstückträgerstaus in der Bearbeitungskette.

In einer weiteren Variante der Erfindung ist vorgesehen, daß das Werkstück beziehungsweise der, das Werkstück tragende Werkstückträger seitlich je von einer Reihe von Rollen als Transporteinrichtung unterstützt und antreibbar ist und die Rollen der ersten Reihe eine, von den Rollen der zweiten Reihe unabhängige Welle aufweist.

Günstigerweise befindet sich zwischen den beiden Rollenreihen das zu transportierende Werkstück beziehungsweise die Palette. Die Anordnung erlaubt es dabei, daß das Werkstück stehend oder hängend transportiert wird. Das Werkstück mag dabei gemäß der Erfindung auf einer Palette montiert oder ohne Palette transportiert werden. Der Einsatz eines Werkstückträgers/Palette hat den Vorteil, daß unabhängig von der Werkstückbreite immer genormte Abstände zwischen den Rollenreihen einsetzbar sind und so ein Transport auch bei unterschiedlichen Werkstückbreiten problemlos möglich ist.

Die Erfindung erlaubt es auch, daß das Werkstück stehend oder hängend bearbeitet beziehungsweise transportiert wird. Insbesondere die hängende Bearbeitung bietet zum Beispiel bei einer Trockenbearbeitung Vorteile, da die Späne problemlos nach unten abfallen können und nicht zum Beispiel auf dem Werkstück oder dem Werkstückträger aufliegen und verschleppt werden können. Gerade bei einer hängenden Bearbeitung ist es von Vorteil, daß der Zwischenraum zwischen den Rollenreihen frei ist. Eine solche Anordnung ist zum Beispiel auch in der Zeichnung gezeigt. Die Erfindung ist aber in gleicher Weise auch bei Anordnungen einsetzbar, bei welchen das Werkstück auf einer Rollenbahn stehend aufliegt. Die Erfindung ist auch einsetzbar bei einer Anordnung, bei welcher die Rollen nicht nur das Werkstück beziehungsweise den Werkstückträger seitlich, sondern über die ganze Breite des Werkstückes unterstützen, also die Rolle seitlich von zwei Wangen geführt ist.

In einer weiteren Ausgestaltung ergibt es sich vorteilhafterweise, daß die Transporttrennvorrichtung bezüglich des Werkstückes als Absenkvorrichtung beziehungsweise als Anhebvorrichtung ausgebildet ist. Die Transporttrennvorrichtung bewirkt, daß die Transporteinrichtung nicht mehr zum Eingriff auf das Werkstück beziehungsweise den Werkstückträger für Transportzwecke kommt. Günstigerweise erfolgt dabei eine Relativbewegung des Werkstückes beziehungsweise Werkstückträgers einerseits und der Transporteinrichtung andererseits.

Gemäß der Erfindung ist es hierbei möglich, zum Beispiel das Werkstück beziehungsweise den Werkstückträger durch die Transporttrennvorrichtung ein wenig anzuheben und so den Transport zu unterbinden. Zum Beispiel tauchen zwischen den Rollen der Transporteinrichtung entsprechende Stifte auf und heben das Werkstück/die Palette ein wenig an.

In einer anderen Variante der Erfindung ist es zum Beispiel möglich, daß die Transporteinrichtung ein wenig abgesenkt wird und das Werkstück zum Beispiel auf entsprechende Auflagen abgesenkt wird. In diesem Fall wirkt die Transporttrennvorrichtung als Absenkvorrichtung.

In einer bevorzugten Ausgestaltung der Erfindung wird vorgeschlagen, daß die Steuerstange der Transporttrennvorrichtung die Transporteinrichtung außer Eingriff auf das Werkstück beziehungsweise den, das Werkstück tragenden Werkstückträger bringt. In diesem Fall wirkt die Transporttrennvorrichtung als Absenkvorrichtung für das Werkstück. Eine solche Anordnung wird einfach dadurch erreicht, daß die Transporteinheit in dem Bearbeitungsraum zumindest teilweise derart ausgebildet ist, daß es auf der, das Werkstück transportierenden Transportebene wegbewegbar, insbesondere wegschwenkbar ist. Günstigerweise ist diese Transporteinheit gelenkig gelagert und dadurch in einfacher Weise wegschwenkbar. Die Steuerstange der Transporteinrichtung wirkt dabei auf den Teil der Transporteinheit und drückt ihn so weit nach unten, bis die Transporteinheit nicht mehr auf das Werkstück wirkt. In diesem Fall liegt dann das Werkstück beziehungsweise der Werkstückträger auf einer Auflage auf.

Alternativ ist es möglich, daß die Transporteinheit auch linear wegbewegt wird, zum Beispiel etwas abgesenkt wird. Auch dies führt dazu, daß die Transporteinheit außer Eingriff mit dem Werkstück kommt. Das Werkstück beziehungsweise die Palette liegt dann auf entsprechenden Auflage in gleicher Weise auf.

In einer bevorzugten Ausgestaltung der Erfindung ist vorgesehen, daß im Bearbeitungsraum zumindest ein Teil der Rollen der Transporteinrichtung um eine Achse schwenkbar gelagert ist und die Steuerstange der Transporttrennvorrichtung auf die Rolle gegen die Kraft einer Rückholfeder derart wirkt, daß die Rolle außer Eingriff auf das Werkstück beziehungsweise den, das Werkstück tragenden Werkstückträger kommt. Die Rückholfeder sorgt dafür, daß, wenn die Steuerstange nicht mehr auf die Transporteinrichtung wirkt, der abgesenkte Teil der Transporteinrichtung wieder auf die Transportebene zurückkehrt und die Transporteinrichtung mit dem Eingriff für den Transport des Werkstückes beziehungsweise der Palette gelangt.

Erfindungsgemäß ist auch vorgesehen, daß die Steuerstange der Transporttrennvorrichtung derart zwangsgeführt auf die Rollen wirkt, daß die Steuerstange sowohl dafür sorgt, daß die Rolle außer Eingriff mit dem Werkstück/Werkstückträger kommt sowie auch wieder dafür sorgt, daß die Rolle wieder in Eingriff mit dem Werkstück/Werkstückträger kommt. Eine solche Anordnung ist insbesondere dann vorteilhaft, wenn auf den Transportrollen eine erhebliche Last ruht, die durch eine Rückholfeder nur schwer zu kompensieren wäre. Die Anordnung mit einer Rückholfeder ist zum Beispiel dann günstig, wenn die Palette stehend eingesetzt wird.

Alternativ wird erfindungsgemäß vorgeschlagen, daß die Rollen der Transportbahn im Bearbeitungsraum derart axial bewegbar sind, daß beim Spannen des Werkstückes bzw. des das Werkstück tragenden Werkstückträgers die Rollen der Spannbewegung des Werkstückes bzw. des Werkstückträgers zu folgen vermögen.

Oftmals wird bei dem Spannen das Werkstück bzw. der Werkstückträger rechtwinklig zur Transportrichtung des Werkstückes bzw. Werkstückträgers in der Transporteinrichtung bewegt. Dabei ist es möglich, daß die Rollen der Transportbahn stören. Erfindungsgemäß werden dabei zwei Möglichkeiten vorgeschlagen. Zunächst wird mit der Transporttrennvorrichtung, wie oben beschrieben, die Transporteinrichtung von dem Werkstück abgekoppelt, wodurch diese auch nicht mehr beim Spannen stören kann. Bei der anderen, jetzt vorgestellten Variante, verbleiben die (z.B. Friktions-) Rollen in Kontakt mit dem Werkstück/Werkstückträger, folgen aber der Spannbewegung.

Hierzu wiederum bestehen ebenfalls mehrere Varianten. Zunächst ist es möglich, daß die Welle, welche das Transportrad trägt, axial beweglich ist. Zum Beispiel ist die Rollenwelle in einer Büchse axial geführt. Die Bewegung erfolgt dabei zum Beispiel gegen eine Rückholfeder oder ist zwangsgeführt. In der anderen alternativen Ausgestaltung ist die Welle axial feststehend, die sich auf der Welle drehende Rolle allerdings hat eine gewisse axiale Beweglichkeit, um so der Spannbewegung zu folgen.

Günstigerweise sieht die Erfindung vor, daß die Spanneinrichtung eine Auflagefläche aufweist, auf welche das Werkstück beziehungsweise der, das Werkstück tragende Werkstückträger in dem Bearbeitungsraum aufliegt, sobald die Transporteinrichtung nicht mehr im Eingriff steht. Diese Anordnung ist insofern günstig, als daß eine andere Auflagefläche nicht benötigt wird. Die Anordnung spart auch Zeit, da die Spanneinrichtung ja das Werkstück hernach spannen soll. Ein weiteres Umsetzen oder Heranführen der Spanneinrichtung ist daher nicht mehr notwendig.

In einer bevorzugten Ausgestaltung der Erfindung ist vorgesehen, daß die Spanneinrichtung mindestens ein Spanneisen aufweist, und das Spanneisen das Werkstück gegen insbesondere feststehende Spannkonen spannt. Die Spannkonen dienen dabei insbesondere für eine genau Positionierung bzw. Indexierung des Werkstückes bzw. des Werkstückträgers.

Die Spanneinrichtung besitzt günstigerweise eine Spannfläche, gegen die das Werkstück beziehungsweise der, das Werkstück tragende Werkstückträger durch ein Spanneisen gespannt wird. Diese Spannfläche ist entsprechend exakt positioniert, da diese unmittelbar auf das Bearbeitungsergebnis der Bearbeitungsmaschine Einfluß nimmt. Die Steuerstange der Spanneinrichtung wirkt dabei zum Beispiel direkt oder mittelbar, zum Beispiel über eine Spanntraverse, auf das Spanneisen.

Dient die Spannfläche als exakter Anschlag beziehungsweise Bezugsfläche, so bleibt immer noch eine Beweglichkeit in dieser Spannfläche, die günstigerweise durch eine Indexierung während des Spannens aufgehoben wird. Das Werkstück wird dadurch während des Spannens genau positioniert.

Alternativ ist erfindungsgemäß vorgesehen, daß die Spanneinrichtung einen oder mehrere bewegbare Spannkonen aufweist, die in mit dem Spannkonen zusammenwirkenden Ausnehmungen des Werkstückes oder den das Werkstück tragenden Werkstückträger eingreifen und gegen ein Auflager spannen. Der Konus kann dabei als Innen- oder Außenkonus ausgebildet sein.

Für das Spannen stehen somit mehrere Varianten zur Verfügung, bei welchen hier zwei Alternativen vorgeschlagen werden. Zunächst wird das Werkstück/Werkstückträger durch ein Spanneisen auf einen Konus gespannt. Hierbei ist das Spanneisen das bewegliche Element, welches die Spannkraft ausübt. Bei der anderen Variante ist der Spannkonus beweglich ausgebildet, der in eine zusammenwirkende Ausnehmung des Werkstückes bzw. des Werkstückträgers eingreift und so die Spannung des Werkstücke erreicht. Sinngemäß kann der Spannkonus als Innen- oder Außenkonus ausgebildet sein und die Ausnehmung sinngemäß hiermit zusammenwirken. Der Konus prägt dabei die Spannkraft ein.

Gemäß der Erfindung ist es dabei möglich, daß die Spannbewegung des Werkstückes bzw. des das Werkstück tragenden Werkstückträgers durch die Spanneinrichtung vertikal, horizontal oder schräg erfolgt, je nachdem, welche Bearbeitung zu erfolgen hat. Letztendlich folgt die Spannrichtung der Bearbeitungsaufgabe. Ist zum Beispiel die Unterseite des Werkstückes zu bearbeiten, so wird es vorteilhaft sein, das Werkstück auf einer stehenden Palette zu bearbeiten. Um die Palette optimal zu spannen, wird eine horizontale Spannbewegung von Vorteil sein. Ist hingegen eine Seitenfläche des Werkstückes zu bearbeiten, so ist es möglich, das Werkstück in der Palette hängend oder auf der Palette stehend zu bearbeiten, wodurch der Werkstückträger/Palette horizontal ausgerichtet ist, günstigerweise erfolgt eine Spannung in vertikaler Richtung. Natürlich ist es auch bei winkligen Bearbeitungen von Vorteil, gegebenenfalls eine schräg im Raum orientierte Spannrichtung vorzusehen. Diesbezüglich beschränkt sich die Erfindung nicht.

Der Antrieb für die Spanneinrichtung und die Transporttrennvorrichtung besitzt günstigerweise ein Getriebe. Das Getriebe dient zum einen zu einem Einstellen des Drehverhältnisses und zum anderen auch, um ein ausreichendes Drehmoment zur Verfügung zu stellen. Es muß zum einen die Steuerstange der Transporttrennvorrichtung gegen die Kraft der Rückholfeder oder der Werkstücklast bewegt werden, zum anderen lastet auf der Spanneinrichtung die gesamte Last des Werkstückes während der Bearbeitung. Da beide Betätigungen ein hohes Drehmoment erfordern, diese Drehmomente aber nicht gleichzeitig abverlangt werden, sondern hintereinander, ergeben sich aus dem erfindungsgemäßen Konzept der Anordnung des Antriebes für die Spanneinrichtung und die Transporttrennvorrichtung als gemeinsamem Antrieb entsprechende Synergieeffekte. Der sowieso vorhandene hohe Drehmoment wird zu einem anderen Zeitpunkt nochmals ausgenutzt.

Der Einsatz eines Getriebes macht die Adaption des wie auch immer gearteten Motors für das jeweilige Lastproblem möglich.

Vorteilhafterweise ist vorgesehen, daß der Antrieb zwei Abtriebswellen aufweist und der Antrieb zwischen den Rollenreihen angeordnet ist. Die Abtriebswellen erstrecken sich dabei je zu einer der beiden Rollenreihen hin. An den Abtriebswellen, die in diesem Fall als Welle, wie vor beschrieben, wirken, liegen dann die Steuerstangen für die Spanneinrichtung und die Transporttrennvorrichtung an.

Es ist vorgesehen, daß der Antrieb als Drehfeldmagnet, Servomotor oder Getriebemotor ausgebildet ist. Diese Anordnung greift auf ein elektromechanisches Prinzip zurück und ist natürlich in beliebiger Weise mit einem Getriebe kombinierbar. Alternativ ist es natürlich auch möglich, daß der Antrieb hydraulisch oder pneumatisch ausgebildet ist. Gerade Anordnungen mit Hydraulik erlauben die Übertragung von höheren Kräften. Dabei ist es in gleicher Weise auch möglich, einen hydraulischen oder pneumatischen Antrieb auf eine Abtriebswelle, wie vor beschrieben, wirken zu lassen. Alternativ ist es natürlich auch möglich, auf die Anordnungen der Wellen zu verzichten und zum Beispiel durch entsprechend gesteuerte Arbeitszylinder, gegebenenfalls in Kniehebelkonstruktion, ähnliche Zwangssteuerungen zu erreichen.

Des Weiteren ist erfindungsgemäß vorgeschlagen, daß Luft- oder Reinigungsflüssigkeitsdüsen für die Rollenlaufflächen und/oder die Spannkonen vorgesehen sind. Erfindungsgemäß ist vorgesehen, daß die Rollenlaufflächen zum Beispiel schräg, insbesondere V-förmig ausgebildet sind. In diesen rillenartigen Laufrädern ist es möglich, daß Späne auffliegen, die dann das Transportieren des Werkstückträgers beeinträchtigen. Diesem wird mit Luftdüsen oder Reinigungsflüssigkeitsdüsen vorgebeugt. Als Reinigungsflüssigkeit wird zum Beispiel Kühlflüssigkeit oder sonst bei Bearbeitungsmaschinen übliche Schmierflüssigkeit, wie sie für das Reinigen und Schmieren bei spanabhebenden Bearbeitungen bekannt ist, eingesetzt. Günstigerweise werden dabei nicht nur die Rollenlaufflächen sondern gegebenenfalls auch die Spannkonen entsprechend spanfrei gehalten.

Erfindungsgemäß ist vorgesehen, daß die Bearbeitungsmaschine als Zerspan-, Umform-, Füge- oder Trennmaschine ausgebildet ist oder die Bearbeitungsmaschine als Prüf-, Montage-, Justage-, Oberflächenbehandlungs-, Kennzeichnungs- oder als Reinigungsstation ausgebildet ist. Die erfindungsgemäße Bearbeitungmaschine legt sich in keinster Weise auf die in ihr stattzufindenden Bearbeitung fest. Alle vorgenannten Bearbeitungsmöglichkeiten bedingen ein Positionieren des Werkstückes. Grundsätzlich soll das Positionieren des Werkstückes möglichst zeitoptimiert und genau erfolgen, was, unabhängig von der tatsächlichen Bearbeitung durch die Erfindung gelöst wird. Die Erfindung ist daher für die beliebigsten Zwecke einer Bearbeitungsmaschine einsetzbar. Zum einen ist es möglich, daß die Bearbeitungsmaschine tatsächlich das Werkstück bearbeitet, also zum Beispiel zerspant, umformt, fügt oder trennt. Darüberhinaus ist es aber auch von Vorteil, daß die Bearbeitungsmaschine als Prüfstation ausgebildet ist, um zum Beispiel entsprechende Bearbeitungen einer davorliegenden Bearbeitungsmaschine zu kontrollieren. Dabei ist es von Vorteil, möglichst frühzeitig entsprechende Prüfungen vorzusehen, um nicht bei der Endkontrolle, wenn eine Vielzahl von Bearbeitungen stattgefunden hat, zu erkennen, daß bereits bei einer frühzeitigen Bearbeitung ein Fehler aufgetreten ist und das ganze Werkstück Ausschuß ist. Es ist auch möglich, die Bearbeitungsmaschine als Montagestation auszubilden. Zum Beispiel ist es möglich, in eine vorher eingebrachten Bohrung das Gewinde einzuschneiden und dann in der Montagestation in diesem Gewinde ein weiteres Bauteil zu montieren. Es ist aber auch möglich, in einer Montagestation zum Beispiel einen Werkstückträgerwechsel durchzuführen, also zum Beispiel einen anderen Werkstückträger zu montieren.

Gleichwohl ist es günstig, die Montagestation zur genauen Positionierung beziehungsweise Ausrichtung des Werkstückes vorzusehen. Des Weiteren ist es möglich, daß die Bearbeitungsmaschine als Oberflächenbehandlungsstation ausgebildet ist. Diese dient zum Beispiel zum Lackieren, Galvanisieren, Bedrucken usw.

Des Weiteren kann als Bearbeitungsmaschine auch eine Einrichtung zur Kennzeichnung von Werkstücken vorgesehen sein. In einer Kennzeichnungsstation ist vorgesehen, daß zum Beispiel Etiketten oder sonstige Kennzeichnungen, gegebenenfalls auch elektronisch auslesbare Kennzeichnungen, wie Barcode oder Transponder an das Werkstück beziehungsweise seine Werkstückträger beziehungsweise Palette angeheftet oder angebracht werden, um das jeweilige Werkstück für die Steuerung zu personifizieren. In der Regel geht dabei ein entsprechender Identifikationsschritt (allerdings nicht zwingend) voraus.

Günstig ist es dabei auch, daß als Bearbeitungsmaschine eine Reinigungsstation beziehungsweise Spül- oder Waschstation vorgesehen ist. Oftmals werden die Werkstücke während der Bearbeitung, zum Beispiel durch Kühlschmiermittel, verschmutzt, welches gerade am Ende einer entsprechenden Prozesslinie abzuwaschen ist. Auch ist es nicht günstig, entsprechende ölhaltige Emulsionen auf den Werkstücken zu belassen, wenn nachfolgend eine Oberflächenbehandlung, wie eine Lackierung oder sonstige Beschichtung, erfolgen soll.

Die vorgenannten Bearbeitungsmaschinen sollen sowohl als automatisch arbeitende Systeme oder auch als Handarbeitsplätze im Sinne der Erfindung ausgeführt sein.

In der Zeichnung ist die Erfindung schematisch gezeigt. Es zeigen:
- Fig. 1: in einer Ansicht die erfindungsgegemäße Bearbeitungsmaschine;
- Fig. 2: eine Seitenansicht der erfindungsgemäßen Bearbeitungsmaschine;
- Fig. 3: in einer Ansicht eine weitere Variante der Erfindung;
- Fig. 4 und 5: weitere Details der Erfindung;
- Fig. 6, 7 und 8: in je einer Ansicht weitere Varianten der Erfindung und
- Fig. 9: ein Detail der Erfindung nach Fig. 8 (siehe Detail IX).

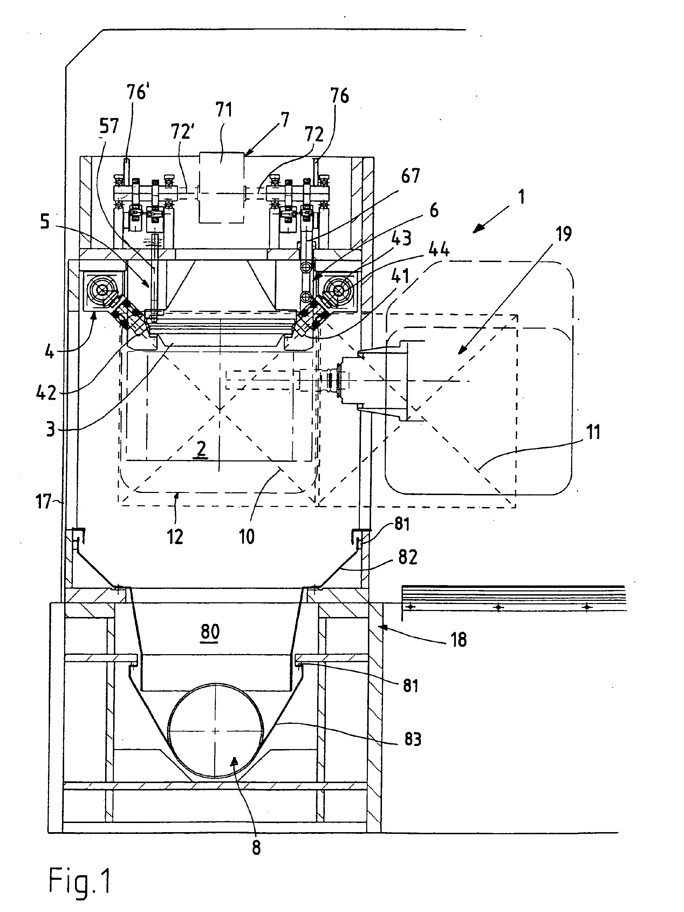

In Fig. 1 ist die erfindungsgemäße Bearbeitungsmaschine schematisch dargestellt. Die Bearbeitungsmaschine 1 besteht dabei aus einem Maschinengestell 18, welches im unteren Bereich den Spansammler 80 beziehungsweise den Spanförderer 8 aufnimmt. Auf das Maschinengestell 18 schließt sich das Maschinengehäuse 17 oberhalb an. Das Maschinengehäuse 17 schließt den eigentlichen Bearbeitungsraum 16 ein.

Das Maschinengehäuse 17 weist mehrere Öffnungen 12 auf, die durch eine Türe 10 verschließbar sind. Die Türe 10 ist in Fig. 1 mit kurzen gestrichelten Linien angedeutet, die Öffnungen 12 mit längeren gestrichelten Linien. Die Türe 10 ist in einer, die Öffnungen 12 verschließenden Stellung sowie in einer die Öffnungen 12 freigebenden Stellung gezeigt. Hierzu ist die Türe 10 nach rechts versetzt. Die Türe 10 ist in diesem Fall als Schiebetüre ausgestaltet, der von der sich bewegenden Türe überstrichende Türbereich ist mit 11 gekennzeichnet.

Für den Türantrieb sind auf der Antriebswelle 72, 72' je eine Riemenscheibe 76, 76' vorgesehen, die über einen nicht dargestellten Zahnriemen die Türen bewegen. Die Anordnung ist dabei so ausgewählt, daß der Durchmesser der Riemenscheiben sowie die Rotation der Welle 72, 72' ausreichen, die Türe 10 vollständig zu öffnen, um ein kollisionsfreies Ein- und Ausfördern des Werkstückes 2 zu erreichen.

Für die Bearbeitung des Werkstückes 2 ist eine Spindel 19 vorgesehen.

In dem hier gezeigten Ausführungsbeispiel hängt das Werkstück 2 an einem Werkzeugträger 3. Diese hängende Bearbeitung hat inbesondere in der Ableitung von Spänen Vorteile, da diese ungehindert in den trichterförmigen Spansammler nach unten abfallen können. Prinzipiell erlaubt eine solche Anordnung eine Trockenbearbeitung, die Anordnung ist aber auch gleichwohl bei Naßbearbeitungen einsetzbar.

Für den Transport des Werkstückes 2 beziehungsweise den das Werkstück 2 tragenden Werkstückträger 3 beziehungsweise Palette ist eine Transporteinrichtung 4 vorgesehen. In dem hier gezeigten Ausführungsbeispiel ist die Tansporteinrichtung 4 von zwei parallel verlaufenden Rollenreihen 41, 42 gebildet. Die Rotationsachsen der Rollen 40 schließen mit der Horizontalen einen spitzen Winkel, bevorzugt einen Winkel von 45° ein. In diesem Fall liegt der Werkstückträger 3 mit entsprechenden Führungsleisten auf den Rollen 40 derart auf, daß der Werkstückträger 3 teilweise über die Rollen 40 nach oben hervorsteht, das Werkstück 2 sich aber unterhalb der Rollen 40 vollständig erstreckt.

Die winkelige Anordnung der Rotationsachsen der Rollen 40 führt auch dazu, daß die Rollen der ersten und der zweiten Rollenreihe nicht auf einer gemeinsamen Welle anzuordnen sind. Dies ist in diesem Ausführungsbeispiel (allerdings ohne dies allgemein auszuschließen) auch nicht vorgesehen, da das Werkstück 2 zwischen den Rollenreihen 41 und 42 transportiert wird.

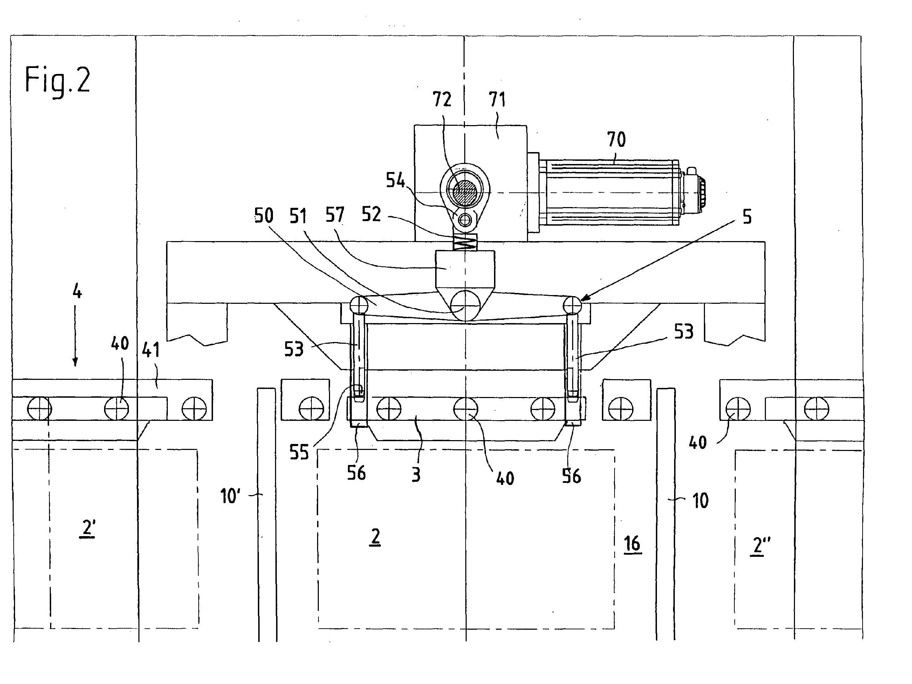

Aufgrund der winkeligen Anordnung der Rotationsachse der Rollen 40 befindet sich deren Antriebswelle 43 oberhalb der Rolle 40. Die Antriebswelle 43 versorgt dabei eine Vielzahl von hintereinander angeordneten Rollen 40, wie das zum Beispiel in Fig. 2 angedeutet ist. Diese können zum Beispiel als Friktionsrollen ausgebildet sein. Der Vorteil einer solchen Anordnung liegt darin, daß mit einer geringen Zahl von Antriebsmotoren eine Vielzahl von Antriebsrollen auf den jeweiligen Rollenreihen 41, 42 antreibbar sind. Gegebenenfalls ist auch nur ein Antrieb für die beiden Rollenreihen 41, 42 vorgesehen. In diesem Fall ist ein entsprechendes Getriebe angeordnet.

Die Anordnung der Antriebswelle 43 oberhalb der Rollen 40 ist auch deswegen geschickt, da die Antriebswelle 43 somit nicht in den Bereich 11 der sich öffnenden Türe 10 hineinragt und mit dieser kollidiert. Die Anordnung ist daher sehr platzsparend. Darüberhinaus ist diese Anordnung auch im Arbeitsraum selbst platzsparend, da die Antriebswelle 43 in dem Bearbeitungsraum weiter oben und somit weiter entfernt von der Spindel 19 angeordnet ist. Die Positioniermöglichkeit der Spindel 19 steigt entsprechend. Die Antriebswelle 43 erstreckt sich dabei parallel zur Transporteinheit 4, längs des Transportweges.

Neben der geschickten Anordnung der Antriebswelle 43 oberhalb der Türe 10 beziehungsweise dessen Bereich 11 ist aus der Zeichnung auch gut zu entnehmen, daß der obere Rand der Türe 10 etwas über dem oberen Rand des das Werkstück 2 tragenden Werkstückträgers 3 angeordnet ist. So wird sicher gewährleistet, daß der Werkstückträger kollissionsfrei aus dem Bearbeitungsraum durch die Öffnung 12 herein- und heraustransportiert wird. Dies gilt natürlich auch, wenn das Werkstück 2 ohne einen Werkstückträger 3 transportiert wird.

Für eine exakte Bearbeitung des Werkstückes 2 im Bearbeitungsraum 13 ist es vorgesehen, daß das Werkstück 2 an exakt bekannten Punkten (sogenannten Indexpunkten) gespannt wird. Dadurch wird das Werkstück im Raum genau festgelegt und die Steuerung der Spindel 19 ist in der Lage, die gewünschten Bearbeitungen an der gewünschten Stelle vorzunehmen.

Die Spanneinrichtung 5 wird betätigt von einem Antrieb 7. Der Antrieb 7 (siehe Fig. 2) besteht dabei zum Beispiel aus einem Motor 70 und einem daran angeschlossenen Getriebe 71. Das Getriebe 71 befindet sich über dem Werkstück 2 und somit in einem Bereich zwischen den beiden Rollenreihen 41, 42.

Die Spanneinrichtung 5 spannt und positioniert den Werkstückträger 3 an insgesamt vier Stellen, nämlich bevorzugt an den jeweiligen Ecken des Werkstückträgers 3. Die Anordnung ist dabei bevorzugt bezüglich der Mittelebene (definiert zwischen den beiden Rollenreihen 41, 42) als symmetrischer Aufbau der Spanneinrichtung vorgesehen.

Die Spanneinrichtung besteht dabei aus mindestens zwei Spannstempel 53 (oder auch Spannkonus), welche die Palette während der Spannung nach unten gegen feststehende Spannflächen 56 spannt. Alternativ ist es möglich, daß Spanneisen vorgesehen sind, welche die Palette während der Spannung nach oben gegen entsprechende Spannflächen spannen. Gleichzeitig erfolgt eine Indexierung und somit auch ein Festlegen des Werkstückträgers exakt im Raum. Die Spannstempel 53 werden dabei letztendlich betätigt von Steuerstangen 57, die ihrerseits exzentrisch auf der Welle beziehungsweise Abtriebswelle 72, 72' gelagert und geführt sind. Das Getriebe 71 treibt die Abtriebswelle/Welle 72, 72' an. Aufgrund des symmetrischen Aufbaues erstreckt sich eine Welle/Abtriebswelle 72 auf der rechten und eine Welle/Abtriebswelle 72' auf der linken Seite des Getriebes 71.

Günstigerweise sind die Wellen 72, 72' noch mehrfach gelagert.

Von Vorteil ist es dabei, daß der Antrieb 7 auch gleichzeitig für die Transporttrennvorrichtung 6 und/oder für die Öffnungs- bzw. Schließbewegung der Türe 10 eingesetzt wird. Die Transporttrennvorrichtung 6 sorgt dafür, daß die Transporteinrichtung 4 während der Spannung des Werkstückes dieses nicht zu transportieren versucht. Hierzu ist, ähnlich wie für die Steuerung der Spanneinrichtung 5, für die Transporttrennvorrichtung 6 eine Steuerstange 67 vorgesehen, die auf Teile der Transporteinheit 4 wirken.

In dem hier gezeigten Ausführungsbeispiel ist die Rolle 40 um die Achse 44 schwenkbar. Die (hier vertikale) Bewegung der Steuerstange 67 führt zu einem Wegschwenken der jeweils damit verbundenen Rollen 40 nach außen (bezüglich des Werkstückes 2).

Dabei ist dieser Mechanismus nicht für alle Rollen 40 der Transporteinheit 4 vorgesehen, sondern bevorzugt nur im Bereich, wo das Werkstück auch durch die Spanneinrichtung 5 zu spannen ist.

In Fig. 2 ist zum Beispiel gezeigt, daß drei Rollen 40 im mittleren Bereich wegschwenkbar ausgebildet sind, die übrigen Rollen 40 diese Option nicht aufweisen.

Durch die Möglichkeit des Wegschwenkens der Rollen 40 wird erreicht, daß die Palette 3 beziehungsweise das Werkstück 2 relativ nach unten abgesenkt wird und auf feststehende Auflageflächen abgelegt werden.

Günstigerweise sind die gelenkig gelagerten Rollen 40 durch die Steuerstange 67 zwangsgeführt. Das bedeutet, sie werden durch die Steuerstange 67 nicht nur nach unten, also außer Eingriff mit dem Werkzeugträger gebracht, sondern auch zwangsweise wieder nach oben in Eingriff mit dieser gebracht. Anstelle dieser Zwangsführung ist es natürlich auch möglich, daß eine Rückholfeder vorgesehen ist und die Steuerstange 67 die Transporteinheit 4 gegen die Kraft dieser Rückholfeder drückt.

Die Ansteuerung der Steuerstange 67 erfolgt dabei in gleicher Weise wie für die Steuerstange 57 der Spanneinrichtung 5. Die Steuerstange 67 ist ebenfalls auf einem exzentrisch angeordneten Kurbelzapfen der Abtriebswelle 72, 72' angeordnet. Auch hier ist die Anordnung wiederum symmetrisch bezüglich der Mittelebene, um beide Rollenreihen 41, 42 außer Eingriff mit der Palette zu bringen.

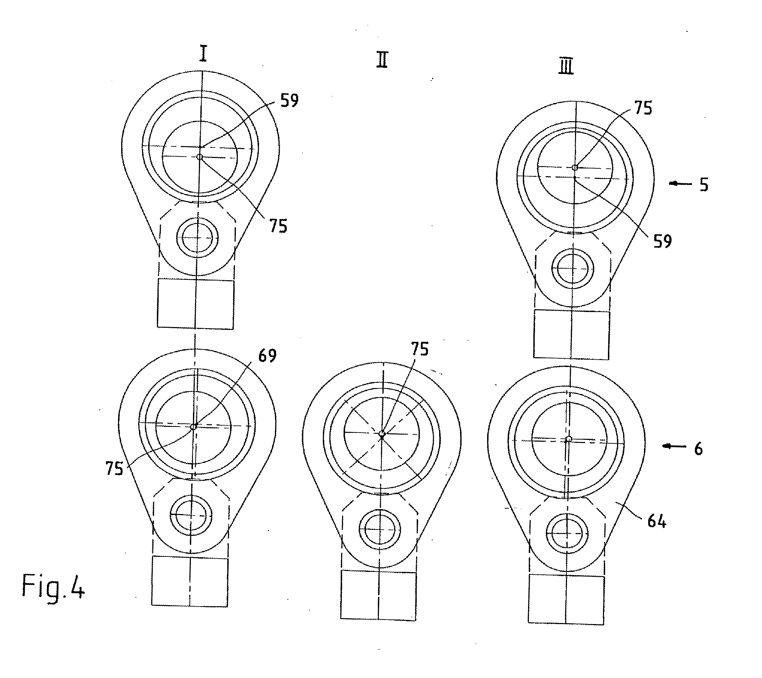

Die Erfindung erlaubt es dabei, in einfacher Weise auch eine Zwangssteuerung der Bewegung der Spanneinrichtung 5 und der Transporttrennvorrichtung 6 vorzusehen, indem die Winkellage der Ansteuerung der jeweiligen Steuerstangen 57, 67 auf den Wellen 72, 72' ausgenutzt wird. Dies ist insbesondere in Fig. 4 gezeigt.

Im unteren Bereich der Bearbeitungsmaschine, im Maschinenbett oder Maschinengestell 18 ist der Spanförderer 8 vorgesehen. Zwischen den Bearbeitungsmaschinen 1 (zum Beispiel in einer mit den erfindungsgemäßen Bearbeitungsmaschinen 1 gebildeten Bearbeitungslinie) befinden sich Rohre oder auch Kanäle mit rechteckigem Querschnitt, die mit entsprechenden Flanschen miteinander verbindbar sind. Im Bereich der Bearbeitungsmaschine ist unterhalb des Bearbeitungsraumes 16 ein Spansammler 80 vorgesehen. Dieser ist bevorzugt trichterförmig ausgebildet und besteht aus mehreren Teilen. Das erste Trichterteil 82 ist bis in den Bearbeitungsraum 16 heraufgezogen. Am oberen Rand sind Eckschieenen angeordnet, um ein sicheres Ableiten der Späne nach unten zu gewährleisten. Das Maschinengestell 18 weist hierbei entsprechende Ausnehmungen auf, durch die das erste Trichterteil 82 nach unten geführt ist. Im unteren Bereich ist das zweite Trichterteil 83 vorgesehen. Auch hier ist die Anordnung so gewählt, daß das erste Trichterteil 82 in das zweite Trichterteil 83 hineinragt und überlappt, um die sichere Ableitung der Späne zu gewährleisten. Das untere, zweite Trichterteil 83 geht über in die Rohrleitung des Spanförderers 8.

Der Vorzug, des aus mehreren Teilen bestehenden Spansammlers 80 besteht darin, daß die Montage deutlich erleichtert wird. Die kleiner gebauten Trichterteile 82, 83 können dabei nacheinander in der Maschine eingebaut werden und durch die im Maschinengehäuse vorgesehenen Öffnungen in diese eingebracht werden.

Bevorzugterweise werden die Trichterteile 82, 83 durch Gummilager 81 an dem Maschinengestell 18 beziehungsweise Maschinengehäuse befestigt. Die Gummilager erlauben eine gewisse Flexibilität der Ausrichtung der Trichterteile 82, 83 bei der Montage.

In Fig. 2 ist in einer Seitenansicht die erfindungsgemäße Bearbeitungsmaschine gezeigt. In dieser Ansicht ist nur die erste Rollenreihe 41 zu sehen, an der eine Vielzahl von Rollen 40 angeordnet sind. Um die Übersichtlichkeit nicht zu sehr zu beeinträchtigen, ist auch die Antriebswelle 43 für die Rollenreihe nicht gezeigt.

Der Bearbeitungsraum 16 der Bearbeitungsmaschine 1 wird begrenzt durch das Maschinengehäuse 17, insbesondere den Türen 10, 10'. Die Anordnung der Bearbeitungsmaschine ist so gewählt, daß die Werkstücke durch die Bearbeitungsmaschine 1 hindurchgefördert werden können. Zum Beispiel ist das Werkstück 2'' bereits ausgefördert, das Werkstück 2 befindet sich im Bearbeitungsraum für eine Bearbeitung und das Werkstück 2' steht in Warteposition vor der Bearbeitungsmaschine.

Für ein optimales Spannen dient die Spanneinrichtung 5. Ein exaktes Spannen ist für eine exakte Bearbeitung zwingende Voraussetzung. Nachfolgend wird insbesondere die Spanneinrichtung 5 genauer erläutert.

Der Antrieb 7, bestehend aus Motor 70 und Getriebe 71 treibt die Abtriebswelle/Welle 72 an. Auf dieser exzentrisch gelagert ist ein Pleuel 54, welches die Rotationsbewegung der Welle 72 in an sich bekannter Weise in eine Transversalbewegung umsetzt. Das Pleuel sitzt dabei in ebenfalls bekannter Weise auf einem exzentrisch angeordneten Kurbelzapfen. Unterhalb des Pleuels 54 befindet sich ein Federpaket 52 für einen Ausgleich der Spannkräfte. Die Steuerstange 57 überträgt letztendlich die Spannbewegung auf die Spannstempel 53 und führen diese nach unten in eine konische Buchse in dem Werkstückträger. Die Spannstempel 53 zentrieren den Werkstückträger in konischen Buchsen und drücken diesen nach unten gegen feststehende, z.B. den Rand des Werkstückträgers 3 umgreifende Auflagen. Hierzu dient das vordere Ende des Stempels 53 als Index 55. Die Indexe 55 zentrieren dabei den Werkstückträger 3 in konischen Buchsen und drücken diesen nach unten gegen feste Umgriffe oder Auflagen bzw. Spannflächen 56.

An der Steuerstange 57 befindet sich eine Spanntraverse 50, die an ihren jeweiligen Enden die C-artigen Umgreifer mit den Spannflächen 56 trägt. Die Spanntraverse 50 ist dabei um das Gelenk 51 neigbar, um auch hier eine optimale Anpassung der Spannbewegung an den Spannprozessen zu erreichen. Die Spanntraverse 50 ist in der Lage um die horizontale Achse 51 leicht zu kippen.

Alternativ ist vorgesehen, daß die Spanneisen den äußeren Rand des Werkstückträgers/Palette umfassen und ziehen diesen, entsprechend der vertikal nach oben geführten Bewegung der Steuerstange, nach oben, wodurch die Palette auf Indexe aufgeschoben wird.

Die Erfindung erlaubt sowohl ein Spannen nach oben, z.B. mit Spanneisen, oder mit Spannstempeln nach unten.

Die Anordnung der Spanntraverse 50 ist dabei an den beiden Längsseiten des Werkstückträgers 3 im Wesentlichen parallel zum Werkstück beziehungsweise dem Transportweg angeordnet.

Es ist bevorzugterweise bezüglich der Mittelebene zwischen den beiden Rollenreihen 41, 42 spiegelbildlich.

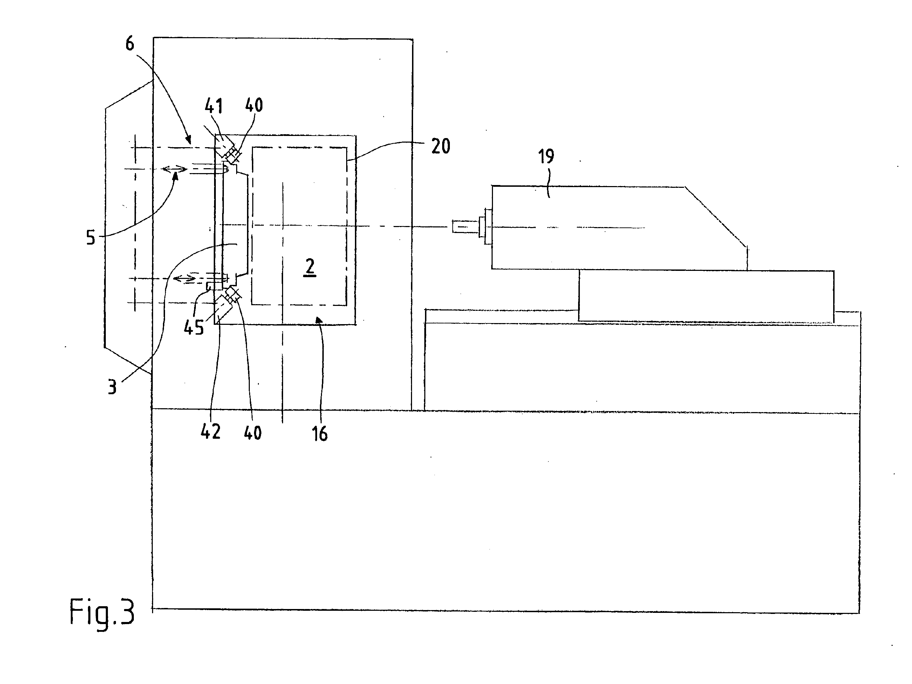

In Fig. 1 und 2 ist der Werkstückträger 3 liegend eingesetzt mit hängend darunter angeordnetem Werkstück. In Fig. 3 ist eine stehende Bearbeitung der Palette 3 gezeigt. Für eine Bearbeitung der Unterseite 20 des Werkstückes 2 ist eine solche Anordnung günstig. Die übrigen vier Seiten des Werkstückes sind durch entsprechendes Umspannen des Werkstückes 2 auf dem Werkstückträger erreichbar. Alternativ ist es möglich, daß das Werkstück bzw. der Werkstückträger zwischen den Bearbeitungsstationen gedreht wird.

Zwar ist in dieser Figur die Antriebswelle 43 nicht gezeigt, aber es ergeben sich auch hier wieder Vorteile bei der Anordnung der Antriebswelle, wie erfindungsgemäß vorgeschlagen, da diese im Bearbeitungsraum möglichst weit nach hinten gesetzt werden und so im Bearbeitungsraum 16 nicht stören.

Für die Transporttrennvorrichtung 6 ist sowohl eine Zwangsführung für die entsprechend angesteuerten Rollen 40 vorgesehen oder aber eine Rückholfeder, gegen die die Steuerstange entsprechend wirkt und die ein Zurückstellen der jeweiligen Transportrollen bewirkt, wenn die Steuerstange entsprechend zurückgezogen wird. Die Erfindung ist sowohl für die eine wie für die andere Anordnung einsetzbar.

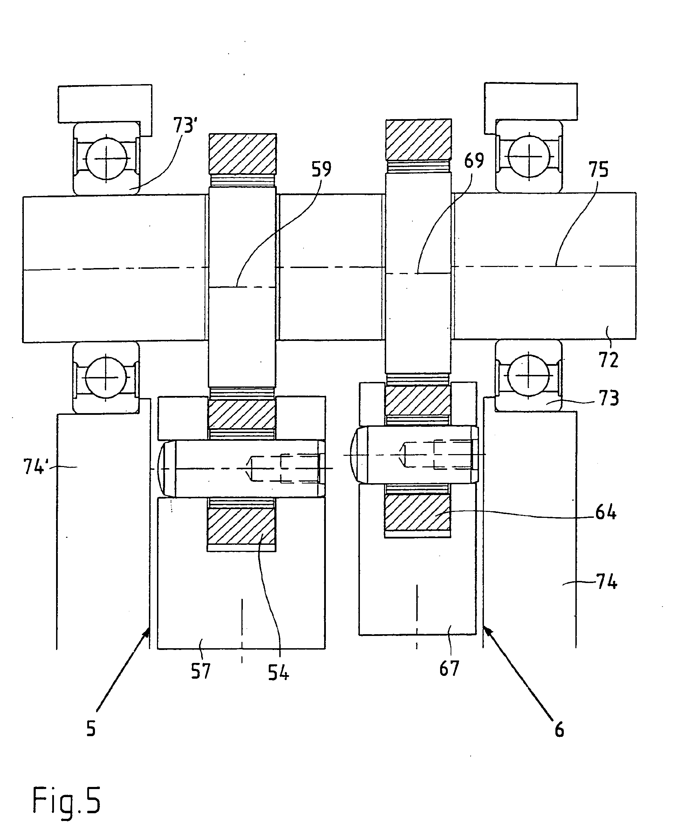

In Fig. 5 ist ein vergrößertes Teil des Antriebes 7 gezeigt. Das von dem Antrieb 7 erzeugte Drehmoment wird über die Abtriebswelle 72 abgeleitet. Die Spanneinrichtung 5 ist zwischen den beiden Lagerböcken 74, 74' links angeordnet, rechts daneben ist die Transporttrennvorrichtung 6 vorgesehen. Die Lagerböcke 74, 74' tragen die Lager 73, 73' der Abtriebswelle 72.

Die Welle 72 weist exzentrisch angeordnete Kurbelzapfen auf, die die jeweiligen Pleuel 54, 64 der Spanneinrichtung 5 beziehungsweise der Transporttrennvorrichtung 6 antreiben. Die Steuerstangen 57, 67 sind durch entsprechende Gelenkbolzen mit dem Pleuel 54, 64 verbunden.

Die Winkelstellung der Kurbelzapfen der Spanneinrichtung 5 und der Transporttrennvorrichtung 6 sind geschickterweise derart angelegt, daß die Steuerstange 67 der Transporttrennvorrichtung 6 zunächst die Rollen 60 der Transporteinheit 6 von dem Werkstück 2 beziehungsweise dem das Werkstück 2 tragenden Werkstückträger 3 abhebt, das Werkstück 2 beziehungsweise der das Werkstück 2 tragende Werkstückträger 3 auf der Auflagefläche der Spanneinrichtung 5 ablegt und hernach die Steuerstange 57 der Spanneinrichtung 5 ein Spannen des Werkstückes 2 an eine Spannfläche bewirkt. Die unterschiedlichen Winkelstellungen der Spanneinrichtung 5 und der Transporttrennvorrichtung 6 sind in Fig. 4 schematisch dargestellt.

In der oberen Reihe sind die Stellungen der Spanneinrichtung 5 gezeigt. In der unteren Reihe sind in drei Ansichten die Stellungen der Transporttrennvorrichtung 6 gezeigt. In der Stellung I ist die Palette nicht gespannt, und die Transporttrennvorrichtung noch nicht aktiv. Die Achse der Abtriebswelle 72 ist mit der Bezugsziffer 75 gekennzeichnet. Die jeweiligen Drehachsen der Pleuel 54 und 64 (der Spanneinrichtung 5 beziehungsweise der Transporttrennvorrichtung 6) sind mit 59 beziehungsweise 69 angegeben.

Es ist gut zu erkennen, daß die Exzentrizität für die Spanneinrichtung 5 größer ist als die Exzentrizität für die Transporttrennvorrichtung 6. Zwischen der Lage in der Stellung I und III liegt eine 180°-Rotation der Welle 72.

In der in I gekennzeichneten Stellung befindet sich die Spanneinrichtung 5 im oberen Totpunkt. Die Transporttrennvorrichtung 6 eilt der Spanneinrichtung um 45° voraus. Dies führt dazu, daß die Transporttrennvorrichtung 6 zunächst für eine Trennung der Transporteinheit 4 von dem Eingriff auf das Werkstück 2 beziehungsweise den Werkstückträger 3 sorgt, wobei die Spanneinrichtung 5 dieser Bewegung erst nacheilt.

In der Stellung II ist die Welle bereits um 135° rotiert. Das Pleuel 64 der Transporttrennvorrichtung befindet sich in seinem unteren Totpunkt. Das bedeutet, daß die Rollen 40 ihren maximalsten Abstand von dem Werkzeugträger 3 beziehungsweise dem Werkstück 2 aufweisen. In jedem Fall sind diese nicht mehr im Eingriff auf das Werkstück 2 beziehungsweise den Werkstückträger 3.

Zu diesem Zeitpunkt ist der Werkstückträger 3 beziehungsweise das Werkstück 2 bereits auf die Ablageflächen der Spanneinrichtung 5 abgesetzt und das Spanneisen 53 hat bereits mit dem Spannen des Werkstückes 2/Werkstückträger 3 begonnen.

Der Spannprozeß ist in der Stellung III abgeschlossen. Das Pleuel 54 der Spanneinrichtung 5 befindet sich in seinem unteren Totpunkt, die Spannkräfte wirken voll. Zwar ist das Pleuel 64 etwas über den unteren Totpunkt hinausgelaufen, dies ist aber unkritisch, da der Hub so bemessen ist, daß in jedem Fall kein Eingriff der Transporteinrichtung auf das Werkstück 2//Werkstückträger 3 erfolgt.

Die Welle 72 wird so lange in der in III gekennzeichneten Stellung gehalten, bis die Bearbeitung abgeschlossen ist. Danach wird die Anordnung wieder gelöst, wobei einfach in diesem Fall entgegen dem Uhrzeigersinn die Welle 72 zurückrotiert und zunächst die Spanneinrichtung 5 entlastet wird und hernach die Transporttrennvorrichtung 6 deaktiviert wird, wodurch die Transporteinheit 4 wieder in Eingriff auf das Werkstück 2/den Werkstückträger 3 kommt.

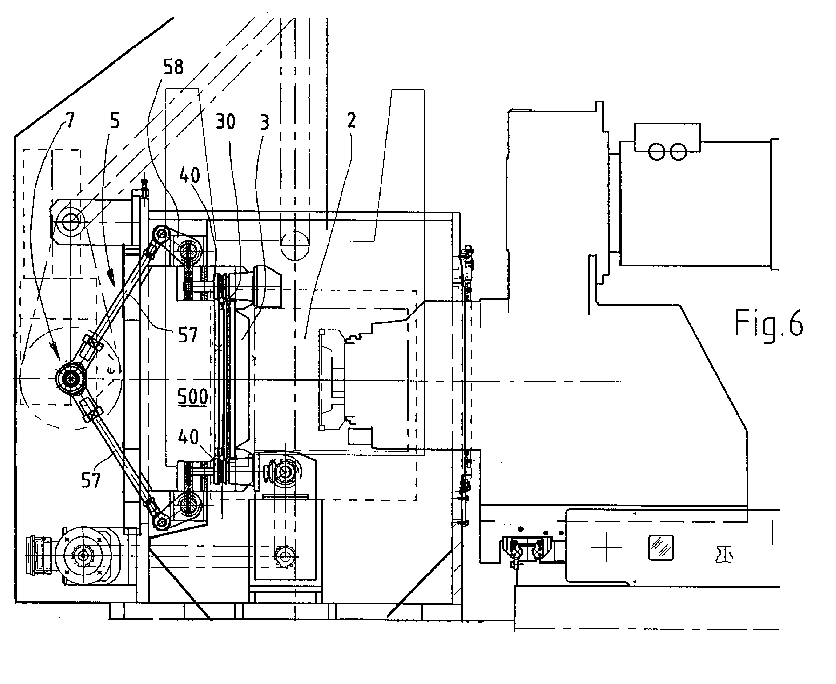

In Fig. 6 ist eine weitere erfindungsgemäße Variante gezeigt. Sie ist prinzipiell mit dem Ausführungsbeispiel nach Fig. 3 vergleichbar, da auch hier eine stehende Anordnung des Werkstückträgers 3 gewählt ist. Allerdings ist hier die Rolle 40 V-förmig oder rillenartig ausgebildet, wodurch sich eine seitliche Führung für den Werkstückträger 3 durch die Rolle 40 ergibt. Die Rollen 40 sind dabei axial gefedert gelagert, um der Spannbewegung, die durch den Zentralantrieb 7 und der Spanneinrichtung 5 eingeprägt wird, zu folgen. Dabei wird über die Steuerstange 57 eine Kraft auf den Kniehebel 58 eingeprägt, um eine Spannbewegung nach rechts zu erreichen. Die Anordnung ist dabei um eine Mittelebene symmetrisch ausgebildet, um durch die symmetrische Anordnung der beiden Steuerstangen 57 und der Kniehebel 58 eine gleichmäßige Kraftbeaufschlagung auf der Spannplatte 500 zu erreichen. Bei der Spannbewegung wird die Spannplatte 500 nach rechts versetzt und die Indexe führen zu einer exakten Positionierung an der gewünschten Stelle. Hierzu weist der Werkstückträger 3 konusartige Aufnahmen 30 auf. Da bei der Spannbewegung die Palette 3 nach rechts versetzt wird, sind die Rollen 40 axial beweglich gelagert und gegen Federpakete verschiebbar, um der Spannbewegung folgen zu können.

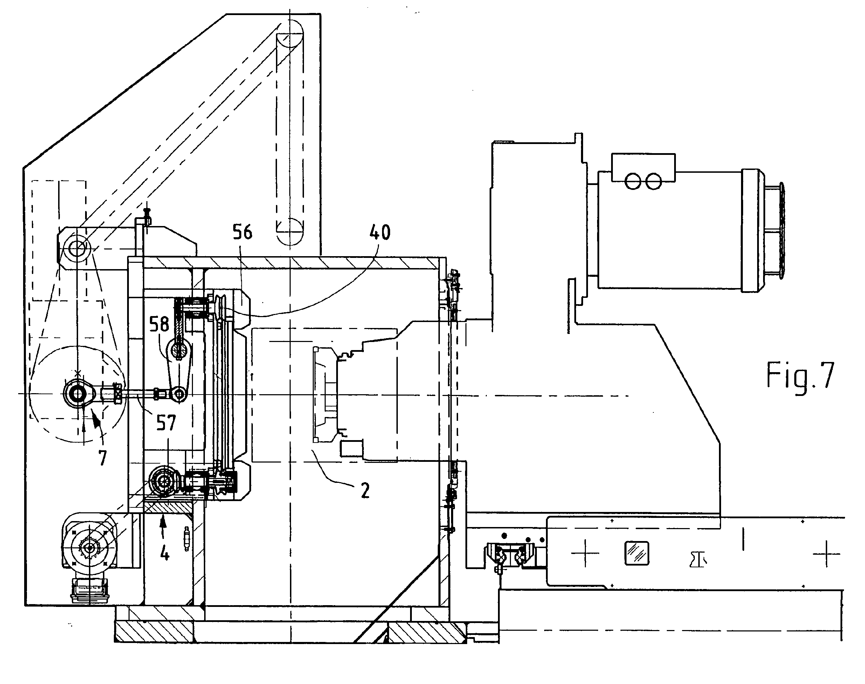

Die Ausgestaltung nach Fig. 7 ist der nach Fig. 6 prinzipiell ähnlich. Im unteren Bereich ist die Transporteinrichtung 4 angedeutet, die die Rollen 40 (unten) antreibt. Auch hier sind rillenartige, V-förmige, gegebenenfalls auch ballig ausgestaltete Antriebsrollen 40 vorgesehen. Die ballige Ausgestaltung führt zu einem punkt- bzw. linienartigen Anliegen und somit zu geringem Verschleiß in den Rollen 40. In der hier gezeigten Variante sind feststehende Spannflächen 56 vorgesehen, gegen die der Werkstückträger 3 gespannt wird. Wiederum wird durch die Steuerstange 57 und den Kniehebel 58 die Spannkraft eingeprägt und die Spannbewegung erfolgt nach rechts. Um ein axiales Versetzen der Rolle 40 zu erlauben besteht entweder die Möglichkeit, daß sich die Welle mitbewegt oder aber die Welle ist fest und die Rolle ist axial gegen die Kraft von Federn beweglich. Um die Welle beweglich auszugestalten, ist zum Beispiel eine Muffe oder Buchse vorgesehen, die die Welle axial führt.

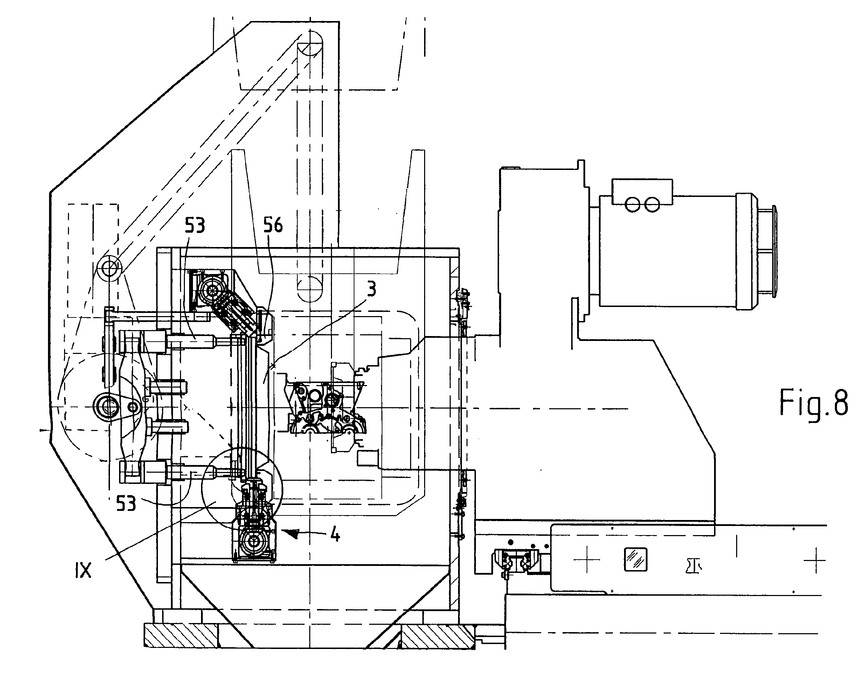

Auch in Fig. 8 ist eine mit den Figuren 6 und 7 vergleichbare Ausgestaltung gezeigt.

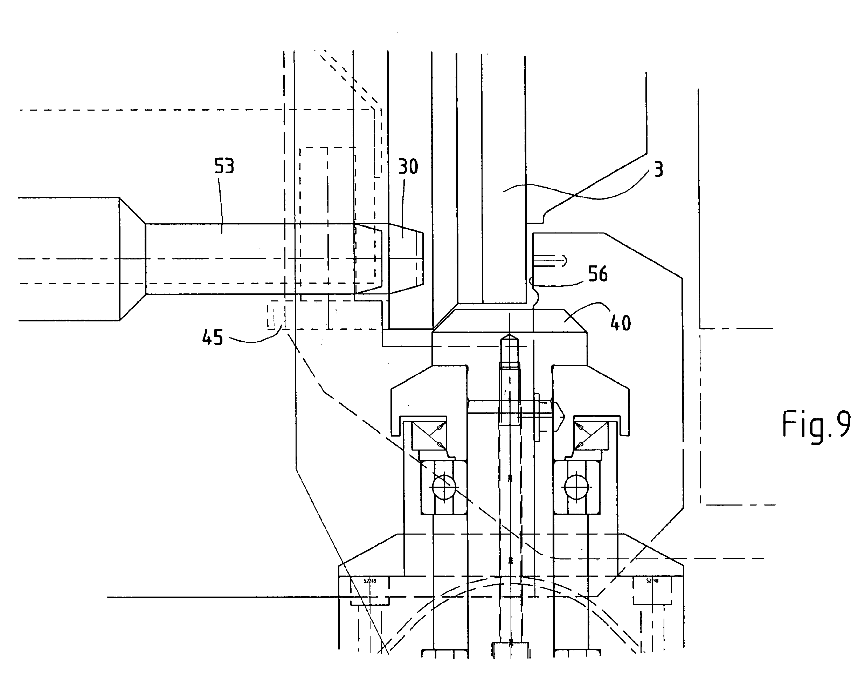

In Fig. 9 ist das Detail IX nach Fig. 8 vergrößert und daher übersichtlicher gezeigt. In Fig. 9 ist angedeutet, daß kegelstumpfartige Rollen 40 eingesetzt werden. Die Anlagefläche an der Palette 3 ist daher schräg orientiert. Die Rotationsachse der Rolle 40 ist vertikal orientiert. Um ein Abrutschen der Palette nach links zu vermeiden, sind Stützrollen 45 links neben der Palette 3 angeordnet, die sich ebenfalls um eine vertikale Achse drehen. Die Rollen 45 sind dabei zylinderartig mit vertikal orientierten Mantelflächen ausgebildet.

Der Antrieb 7 wirkt hierbei auf den Spannstempel 53, die Spannrichtung ist nach rechts. Der vordere, konische Bereich greift als Spannkonus in eine konusartige Ausnehmung 30 in dem Werkstückträge bzw. der Palette 3 ein. Dadurch wird der Werkstückträger 3 gegen die Spannfläche 56 gedrückt, die gesamte Lagerung der Rolle 40 ist ebenfalls in der Lage, dieser Bewegung zu folgen.

Prinzipiell ist natürlich die Spannbewegung auch umgekehrt möglich, nämlich derart, daß der Spannkonus feststehend ist und ein Spanneisen bewegt wird, welches die Palette in dem in Fig. 8 gezeigten Ausführungsbeispiel nach links versetzen würde und so spannt. In diesem Fall müßten nur die Abstützräder 45 zurückweichbar ausgebildet sein.

Die jetzt mit der Anmeldung und später eingereichten Ansprüche sind Versuche zur Formulierung ohne Präjudiz für die Erzielung weitergehenden Schutzes.

Sollte sich hier bei näherer Prüfung, insbesondere auch des einschlägigen Standes der Technik, ergeben, daß das eine oder andere Merkmal für das Ziel der Erfindung zwar günstig, nicht aber entscheidend wichtig ist, so wird selbstverständlich schon jetzt eine Formulierung angestrebt, die ein solches Merkmal, insbesondere im Hauptanspruch, nicht mehr aufweist.

Die in den abhängigen Ansprüchen angeführten Rückbeziehungen weisen auf die weitere Ausbildung des Gegenstandes des Hauptanspruches durch die Merkmale des jeweiligen Unteranspruches hin. Jedoch sind diese nicht als ein Verzicht auf die Erzielung eines selbständigen, gegenständlichen Schutzes für die Merkmale der rückbezogenen Unteransprüche zu verstehen.

Merkmale, die bislang nur in der Beschreibung offenbart wurden, können im Laufe des Verfahrens als von erfindungswesentlicher Bedeutung, zum Beispiel zur Abgrenzung vom Stand der Technik beansprucht werden.

Merkmale, die nur in der Beschreibung offenbart wurden, oder auch Einzelmerkmale aus Ansprüchen, die eine Mehrzahl von Merkmalen umfassen, können jederzeit zur Abgrenzung vom Stande der Technik in den ersten Anspruch übernommen werden, und zwar auch dann, wenn solche Merkmale im Zusammenhang mit anderen Merkmalen erwähnt wurden beziehungsweise im Zusammenhang mit anderen Merkmalen besonders günstige Ergebnisse erreichen.

## Patentansprüche

1. Bearbeitungsmaschine, bei welcher das Werkstück durch eine Transporteinrichtung in den Bearbeitungsraum der Bearbeitungsmaschine transportiert wird und das Werkstück bzw. ein das Werkstück tragender Werkstückträger in der Bearbeitungsposition von einer Spanneinrichtung gespannt wird, **dadurch gekennzeichnet, daß** die Transporteinrichtung (4) sowohl für einen An- und Abtransport des Werkstückes (2) zur Bearbeitungsmaschine (1), insbesondere von und zu benachbarten Bearbeitungsmaschinen wie auch für den Transport des Werkstückes (2) in den Bearbeitungsraum (16) sorgt.

2. Bearbeitungsmaschine nach Anspruch 1, **dadurch gekennzeichnet, daß** die Transporteinrichtung das Werkstück bzw. ein das Werkstück tragender Werkstückträger direkt in die Spanneinrichtung transportiert.

3. Bearbeitungsmaschine nach einem oder beiden der vorhergehenden Ansprüche, **dadurch gekennzeichnet, daß** der Bearbeitungsraum (16) durch mindestens eine Türe (10) verschließbar ist, welche horizontal oder vertikal bewegbar ist.

4. Bearbeitungsmaschine nach einem oder mehreren der vorhergehenden Ansprüche, **dadurch gekennzeichnet, daß** ein gemeinsamer Antrieb (7) für die Spanneinrichtung (5) und für eine Transporttrennvorrichtung (6) vorgesehen ist und die Transporttrennvorrichtung (6) dafür sorgt, daß die Transporteinrichtung (4) während des Spannens des Werkstückes (2) nicht das Werkstück (2) zu transportieren versucht und ermöglicht, daß die Spanneinrichtung das Werkstück spannt.

5. Bearbeitungsmaschine nach einem oder mehreren der vorhergehenden Ansprüche, **dadurch gekennzeichnet, daß,** nachdem das Werkstück (2) in den Bearbeitungsraum (16) eintransportiert ist, zunächst der Antrieb (7) auf die Transporttrenneinrichtung (6) und hernach der Antrieb (7) auf die Spanneinrichtung (5) wirkt und/oder während die Spanneinrichtung (5) das Werkstück bzw. einen das Werkstück tragenden Werkstückträger spannt, die Transporteinrichtung das Werkstück nicht bewegt und/oder **gekennzeichnet durch** eine, bevorzugt mechanisch ausgebildete Zwangssteuerung des Antriebes (7) der Transporttrennvorrichtung (6) und/oder der Spanneinrichtung (5).

6. Bearbeitungsmaschine nach einem oder mehreren der vorhergehenden Ansprüche, **dadurch gekennzeichnet, daß** die Spanneinrichtung (5) und die Transporttrennvorrichtung (6) je eine Steuerstange (57, 67) aufweisen, auf die eine von dem Antrieb (7) angetriebene Welle (72, 72') wirkt und/oder die Welle (72, 72') zu unterschiedlichen Winkelstellungen auf die Steuerstange (67, 57) der Transporttrennvorrichtung (6) beziehungsweise der Spannvorrichtung (5) wirkt und/oder die Steuerstange (57, 67) eine Pleuelstange (54, 64) aufweist und an der Welle (72, 72') exzentrisch ein Kurbelzapfen angeordnet ist, welcher mit der Pleuelstange (54, 64) verbunden ist.

7. Bearbeitungsmaschine nach einem oder mehreren der vorhergehenden Ansprüche, **dadurch gekennzeichnet, daß** die Welle Nocken besitzt und die Nocken auf die Steuerstange wirken und/oder das Werkstück (2) mit oder ohne Werkstückträger (3) von der Transporteinrichtung (4) transportiert wird und/oder der obere Rand der Türe (10) etwas über dem oberen Rand des Werkstückes (2) beziehungsweise eines das Werkstück (2) tragenden Werkstückträgers (3) angeordnet ist.

8. Bearbeitungsmaschine nach einem oder beiden der vorhergehenden Ansprüche, **dadurch gekennzeichnet, daß** die Transporteinrichtung (4) eine zentrale Antriebswelle (43) aufweist und/oder die Antriebswelle (43) außerhalb, bevorzugt oberhalb der Türe (10) beziehungsweise dem von der sich öffnenden Türe (10) überstrichenen Türbereich (11) angeordnet ist und/oder der gemeinsame Antrieb (7) auch auf die Türe (10) wirkt und/oder der Antrieb (7) der Türe (10) zwangsgesteuert, insbesondere mit dem Antrieb der Transporttrennvorrichtung (6) und/oder der Spanneinrichtung (5), erfolgt und/oder die von dem Antrieb (7) angetriebenen Wellen über Riemenscheiben und Zahnriemen die Türe bewegen.

9. Bearbeitungsmaschine nach einem oder mehreren der vorhergehenden Ansprüche, **dadurch gekennzeichnet, daß** die Transporteinrichtung (4) als Rollenbahn ausgebildet ist und/oder die Drehachsen der Rollenbahn horizontal, vertikal und/oder schräg orientiert sind und/oder die Auflageflächen des werkstückträgers, die mit den Rollen der Transporteinrichtung zusammenwirken, horizontal, vertikal oder schräg orientiert ausgebildet sind.

10. Bearbeitungsmaschine nach einem oder mehreren der vorhergehenden Ansprüche, **dadurch gekennzeichnet, daß** die Transporttrennvorrichtung (6) bezüglich des Werkstückes (2) als Absenkvorrichtung oder als Anhebvorrichtung ausgebildet ist und/oder die Steuerstange (67) der Transporttrennvorrichtung (6) die Transporteinrichtung (4) außer Eingriff auf das Werkstück (2) beziehungsweise den das Werkstück (2) tragenden Werkstückträger (3) bringt.

11. Bearbeitungsmaschine nach einem oder mehreren der vorhergehenden Ansprüche, **dadurch gekennzeichnet, daß** das Werkstück (2) beziehungsweise der das Werkstück (2) tragende Werkstückträger (3) seitlich je von einer Reihe (41, 42) von Rollen (40) als Transporteinrichtung (4) unterstützt und antreibbar sind und die Rollen (40) der ersten Reihe (41) und die Rollen (40) der zweiten Reihe (42) auf unabhängigen Wellen angeordnet sind und/oder das Werkstück (2) zwischen den beiden Rollenreihen (41, 42) angeordnet ist und/oder das Werkstück (2) auf dem Werkstückträger (3) stehend oder hängend aufgespannt ist, beziehungsweise das Werkstück (2) stehend oder hängend transportiert beziehungsweise bearbeitet wird.

12. Bearbeitungsmaschine nach einem oder mehreren der vorhergehenden Ansprüche, **dadurch gekennzeichnet, daß** der Werkstückträger (3) im Bearbeitungsraum während der Bearbeitung liegend oder stehend ausgerichtet ist und/oder liegend beziehungsweise stehend transportiert wird.

13. Bearbeitungsmaschine nach einem oder mehreren der vorhergehenden Ansprüche, **dadurch gekennzeichnet, daß** die Transporteinrichtung (4) in dem Bearbeitungsraum (16) derart ausgebildet ist, daß diese aus der das Werkstück (2) transportierenden Transportebene wegbewegbar, insbesondere wegschwenkbar ist und/oder im Bearbeitungsraum (16) zumindest ein Teil der Rollen (40) der Transporteinrichtung (4) um eine Achse (44) drehbar gelagert sind und die Steuerstange (67) der Transporttrennvorrichtung (6) auf die Rolle (40) gegen die Kraft einer Rückstellfeder oder zwangsgeführt derart wirkt, daß die Rolle (40) außer Eingriff auf das Werkstück (2) beziehungsweise den das Werkstück (2) tragenden Werkstückträger (3) kommt und/oder die Steuerstange (67) der Transporttrennvorrichtung derart zwangsgeführt auf die Rolle (40) wirkt, daß die Steuerstange sowohl dafür sorgt, daß die Rolle (40) außer Eingriff mit dem Werkstück (2) beziehungsweise dem Werkstückträger (3) kommt, sowie auch wieder dafür sorgt, daß die Rolle (40) wieder in Eingriff mit dem Werkstück (2) beziehungsweise dem Werkstückträger (3) kommt.

14. Bearbeitungsmaschine nach einem oder mehreren der vorhergehenden Ansprüche, **dadurch gekennzeichnet, daß** die Rollen der Transportbahn im Bearbeitungsraum derart axial bewegbar sind, daß beim Spannen des Werkstückes bzw. des das Werkstück tragenden Werkstückträgers die Rollen der Spannbewegung des Werkstücks bzw. Werkstückträgers zu folgen vermögen und/oder die Spanneinrichtung (5) eine Auflagefläche aufweist, auf welcher das Werkstück (2) beziehungsweise der das Werkstück (2) tragende Werkstückträger (3) in dem Bearbeitungsraum (16) aufliegt, sobald die Transporteinrichtung (4) nicht mehr im Eingriff ist und/oder die Spanneinrichtung (5) eine Spannfläche aufweist, gegen die das Werkstück (2) beziehungsweise der das Werkstück (2) tragenden Werkstückträger (3) gespannt wird.

15. Bearbeitungsmaschine nach einem oder mehreren der vorhergehenden Ansprüche, **dadurch gekennzeichnet, daß** das Werkstück (2) während des Spannens genau positioniert beziehungsweise indexiert wird und/oder die Steuerstange (57) der Spanneinrichtung (5) das Spannen des Werkstückes (2) bewirkt und/oder die Spanneinrichtung mindestens ein Spanneisen aufweist und das Spanneisen das Werkstück (2) gegen insbesondere feststehende Spannkonen spannt.

16. Bearbeitungsmaschine nach einem oder mehreren der vorhergehenden Ansprüche, **dadurch gekennzeichnet, daß** die Spanneinrichtung einen oder mehrere bewegbare Spannkonen (53) aufweist, die in mit den Spannkonen zusammenwirkenden Ausnehmungen des Werkstückes oder den das Werkstück tragenden Werkstückträger eingreifen und gegen ein Auflager spannen und/oder die Spannbewegung des Werkstückes bzw. des das Werkstück tragenden Werkstückträgers durch die Spanneinrichtung vertikal, horizontal oder schräg erfolgt und/oder das Werkstück (2) beziehungsweise der Werkstückträger (3) durch mindestens zwei mal zwei Spanneisen gespannt werden, und die Spanneisen bevorzugt in den Eckbereichen des Werkstückes (2) beziehungsweise des Werkstückträgers (3) ansetzen.

17. Bearbeitungsmaschine nach einem oder mehreren der vorhergehenden Ansprüche, **dadurch gekennzeichnet, daß** eine Spanntraverse (50) vorgesehen ist, die sich im Wesentlichen parallel zum Werkstück (2) beziehungsweise Werkstückträger (3) erstreckt, und die Traverse (50) die Spanneisen oder die Spannkonen (53) bewegt und/oder die Steuerstange (57) auf die Spanntraverse (50) wirkt und/oder die Spanntraverse (50) gelenkig (51) an der Steuerstange (57) gelagert ist.

18. Bearbeitungsmaschine nach einem oder mehreren der vorhergehenden Ansprüche, **dadurch gekennzeichnet, daß** der Antrieb (7) ein Getriebe (71) aufweist und/oder der Antrieb (7) zwei Abtriebswellen (72, 72') aufweist und der Antrieb (7) zwischen den Rollenreihen (41, 42) angeordnet ist und/oder jede Antriebswelle (72, 72') als Welle (72, 72') auf die Steuerstangen (57, 67) wirkt und/oder der Antrieb (7) als Drehfeldmagnet, Servomotor oder Getriebemotor ausgestattet ist und/oder der Antrieb (7) hydraulisch oder pneumatisch ausgebildet ist.

19. Bearbeitungsmaschine nach einem oder mehreren der vorhergehenden Ansprüche, **dadurch gekennzeichnet, daß** die Steuerstange (67) der Transporttrennvorrichtung (6) zumindest die Rollen (40) der Transporteinrichtung (4) von dem Werkstück (2) beziehungsweise dem das Werkstück (2) tragenden Werkstückträger (3) abhebt, das Werkstück (2) beziehungsweise der das Werkstück (2) tragende Werkstückträger (3) auf der Auflagefläche der Spanneinrichtung (5) ablegt und hernach die Steuerstange (57) der Spanneinrichtung (5) ein Spannen des Werkstückes (2) beziehungsweise des das Werkstück (2) tragenden Werkstückträgers (3) gegen die Spannfläche bewirkt.

20. Bearbeitungsmaschine nach einem oder mehreren der vorhergehenden Ansprüche, **dadurch gekennzeichnet, daß** in der Bearbeitungsmaschine (1) ein trichterförmiger, bevorzugt aus mehreren Teilen (82, 83) bestehender Spänesammler (80) angeordnet ist und/oder Gummilager (81) vorgesehen sind, um den Spänesammler (80) an der Bearbeitungsmaschine zu befestigen.

21. Bearbeitungsmaschine nach einem oder mehreren der vorhergehenden Ansprüche, **dadurch gekennzeichnet, daß** die Bearbeitungsmaschine (1) als Zerspan-, Umform-, Füge- oder Trennmaschine ausgebildet oder die Bearbeitungsmaschine (1) als Prüfstation, Montagestation, Justagestation, Oberflächenbehandlungsstation, Kennzeichnungsstation oder als Reinigungsstation ausgebildet ist.

22. Bearbeitungsmaschine nach einem oder mehreren der vorhergehenden Ansprüche, **gekennzeichnet durch** Luft- oder Reinigungsflüssigkeitsdüsen für die Rollenlaufflächen und/oder die Spannkonen.
